# EUROPEAN PATENT APPLICATION

(11) **EP 4 799 792 A1**
(43) Date of publication of application: **02.09.2026**
(21) Application number: 25160578.8
(22) Date of filing: 27.02.2025
(51) Int. Cl.: B29C 48/92, B29K 105/26, B29B 17/02, B29B 17/04

(54) **METHOD FOR PROVIDING A RECYCLED PLASTICS EXTRUDATE RE WITH DESIRED COLOR VALUES AND COLOR CONSISTENCY FROM RECYCLED PLASTICS FLAKES RF**

(71) Applicant: Borealis GmbH, 1020 Vienna (AT)
(72) Inventor: HETTRICH-KELLER, Michael, 4021 Linz (AT); SOBCZAK, Lukas, 4021 Linz (AT)
(74) Representative: Maikowski & Ninnemann Patentanwälte Partnerschaft mbB

(57) **Abstract**

The present invention relates to a method for providing a recycled plastics extrudate RE with a desired color value and color distribution from recycled plastics flakes RF comprising the following steps: providing a stream of recycled mixed-color plastics flakes RF, measuring the color values of at least a part of the stream of the recycled mixed-color plastics flakes RF and determining the color distribution from the measured color values, predicting the color values of the recycled plastics extrudate RE based on the measured color values of the recycled mixed-color plastics flakes RF by applying a color prediction tool CPT, pre-adjusting the color values of the recycled mixed-color plastics flakes RF by changing the color composition of the recycled mixed-color plastics flakes RF to meet the desired color values of the recycled plastics extrudate RE by removing at least one color fraction of the recycled mixed-color plastics flakes RF in at least one sorting unit from at least a part of the stream of the recycled mixed-color plastics flakes RF and/or by adding at least one color fraction of plastics flakes to the recycled mixed-color plastics flakes RF during homogenization; homogenizing the color pre-adjusted recycled mixed-color plastics flakes RF; and extruding the color pre-adjusted recycled plastics flakes RF to obtain the recycled plastics extrudate RE with the desired color values while measuring the final color of the recycled plastics extrudate RE.

## Description

The present invention refers to a method for providing a recycled plastics extrudate RE with a desired color accuracy / consistency or desired color values from recycled plastics flakes RF, and a process line for carrying out said method.

### Description

Recycling of plastic waste is generally known as the process of collecting plastic waste, processing it and using it as a raw material for making new plastic products. Recycling of plastic waste contributes to reduce plastic pollution and its environmental impact.

Generally, collected plastic waste includes multiple fractions of different colors (such as white, transparent etc.) and different polymer types (such as PE, PP etc.) all mixed together. To be able to make new high-quality plastic products thereof, the recycling of plastic waste includes a step of mechanical sorting (like optical sorting, density separation, wind sifting,. etc.) of the plastic waste according to colors and/or polymer types into different fractions of plastic waste by a sorting unit. Then, after the mechanical sorting, the sorted fractions of plastic waste pure in type and/or color can be post-processed into plastic recyclates and subsequently into new high-quality plastic products of a desired color and type. However, color sorting is usually very time-consuming and cost-intensive if high sorting qualities are to be achieved.

Optical sorting as part of recycling of plastic waste allows a pre-sorting of the recyclate into fractions with different color qualities, such as a fraction of natural color, a fraction of white color, and a mixed fraction that includes all colors. Extruding this mixed fraction without any further treatment, leads to unacceptable color variations (different shades of grey or even drifts into reddish tones, etc.). Thus, no reliable prediction can be made about the color of an extrudate obtained from such a mixed color fraction after processing, since the color composition of the recycled material varies from batch to batch as well as regionally and seasonally.

Currently a significant excess of colorant is used in the coloring process to achieve the desired target color to obtain a homogeneous colored regranulate. Besides, in case the color variation inside the batch or between different batches is too large, a color adjustment in the extruder is not possible any more even when using high amount of colorants.

The required high recycling rates for plastics are a significant challenge for recyclers of plastics for a variety of reasons. To broaden the area of application for polyolefine (PO) recyclates, a quality level close to virgin POs is expected and requested from the market. Due to significant inter- and intrabatch variations of the color composition of washed and sorted PO flakes, the color consistency of the extruded pellets is not meeting the tolerances defined by the market.

In one approach to address this problem a system for reliable and material-efficient coloring during the processing (i.e. extrusion) of unmixed, unsorted recycled material was developed (Automated color control for recycling, Extrusion International 1/2023, 40-42). This system makes it possible to build up a control system that adjusts the addition of the colorant during coloring based on the input material and thus enables a constant product color with fluctuating input material. However, this system describes only the concept to react on color deviations during extrusions. The concept on its own is not sufficient to react on larger color instabilities which are common in polyolefin recycling.

However, it is not possible to even out the considerable color differences from the incoming waste streams via color adaption in the extruder alone (control loop). Such material would not fulfil the color specifications for the end product but often would be offspec material.

It is therefore an object of the invention to provide a method that allows an improved color adaptation of recycled mixed-color plastics waste stream to meet the color specification of the extrudate. Specifically, it is an object of the present invention to provide a method that allows a reduction of the color deviation of the extrudate product.

This object is solved by providing a method having the features of claim 1.

Accordingly, a method for providing a recycled plastics extrudate RE with desired color values and color deviation from recycled mixed-color plastics flakes RF is described, wherein the method comprises the following steps:
- providing a stream of recycled mixed-color plastics flakes RF,
- measuring the color values of at least part of the stream of the recycled mixed-color plastics flakes RF and determining the color composition from the measured color values,
- predicting the color values of the recycled plastics extrudate RE based on the measured color values of the recycled mixed-color plastics flakes RF by applying a color prediction tool CPT,
- pre-adjusting the color values by changing the color composition of the recycled mixed-color plastics flakes RF to meet the desired color values of the recycled plastics extrudate RE by removing at least one color fraction of plastics flakes from at least a part of the stream of the recycled mixed-color plastics flakes RF in at least one sorting unit and/or by adding at least one color fraction of plastics flakes during homogenization;
- homogenizing the color pre-adjusted recycled mixed-color plastics flakes RF; and
- extruding the color pre-adjusted recycled plastics flakes RF to obtain the recycled plastics extrudate RE with the desired color values while measuring the final color of the recycled plastics extrudate RE.

Thus, a method is provided that allows a pre-adjustment of the color composition or color distribution, and color values of the incoming stream of recycled mixed-color plastics flakes RF before the recycled mixed-color plastics flakes RF are processed in the extruder and are further color adjusted in the extruder. The underlying idea is to narrow down the color tolerance band achievable in pelletized polyolefin rigid recyclates by a two-step approach.

The first step is a pre-adjustment of the color composition of the incoming recycled mixed-color plastics flakes RF by adding or removing dedicated color fractions like green, blue or red of the incoming recycled mixed-color plastics flakes RF stream by state of the art flake sorting technology comprising at least one optical sorter unit for each color fraction. This requires measuring the color values of the recycled plastics flakes RF and determining the color distribution from the measured color values. In an embodiment, the color values of at least a part of the stream of recycled mixed-color plastics flakes RF, are measured inline, for example by an inline RGB camera system.

If the color distribution or color composition of the incoming recycled mixed-color plastics flakes RF stream causes a deviation of the desired color distribution of the extrudate product, the color values and color distribution of the incoming recycled mixed-color plastics flakes RF stream is pre-adjusted, for example by removing at least one specific color fractions of the recycled plastics flakes RF during flake sorting.

The removed color fractions of the recycled mixed-color plastics flakes RF are conveyed to intermediate storage silos. It has been found that e.g. high amounts of blue recyclate flakes have a strong effect on the final color which can practically not be compensated by adding the complementary color solely in the extruder.

The colors and their amounts that have to be removed from the incoming recycled plastics flakes RF stream has to be calculated by a color prediction tool (CPT) or color prediction model that is described in more detail below. The CPT model allows to predict the final color of the recycled plastics extrudate RE based on the color composition of the incoming recycled plastics flakes RF.

After flake sorting, the remaining flakes are further conveyed to a homogenization silo. At this stage, it is possible to add certain color fractions to the recycled mixed-color plastics flake RF stream if needed according to the calculations of the CPT model. Preferably, these color fractions consist of flakes that have been removed from the stream earlier, again according to the CPT model, and have been stored e.g. in silos. The mixture needs to be homogenized properly in e.g. mixing silos before extrusion. This generates a predictable and consistent color composition of the flake mixture which allows to achieve a narrow color specification of the extrudate.

The second step, color distribution and color consistency is further optimized during extrusion. The color pre-adjusted recycled plastics flakes RF are transferred from the homogenizer to an extruder, like a twin-screw extruder. The extruder melts and homogenizes the recycled plastics flakes RF and mixes their color. The color values of the extrudate is measured inline, either in the melt in the extruder or at the pellets at the extruder outlet, or potentially on an extruded strip or strand.

In case the extrudate color doesn't meet the desired color specification, one or more colorants are added via a color control loop to meet the final, narrow color specification of the plastics extrudate RE; i.e. a control loop feeds back the current color values to the controller for comparison with the set values and one or more, typically up to four, color masterbatches are added to the extruder to correct the color of the extrudate during the extrusion step.

### Recycled mixed-color plastics flakes RF

As indicated previously, the incoming stream of recycled mixed-color plastics flakes RF originates from plastic waste. Several possible feedstocks from municipal trash collection systems are commercially available and allow providing post-consumer plastic trash. Depending on the participation of the consumer, the purity of those feedstocks will differ which is usually indicated by the collecting systems.

The recycled plastics flakes RF used in the present method are mixed color plastic flakes as often processed in conventional mechanical recycling plants or even can be bought from feedstock suppliers.

Preferably, recycled plastics flakes RF were previously mechanically sorted and separated from single color fractions like e.g. white colored and/or transparent material, before entering the present process.

Such a mechanical sorting process is for example described in WO 2023/180222 A1.

Accordingly, recycled plastics flakes RF used as starting material in the present case are obtained in a mechanical sorting process comprising the following steps:
a) providing a precursor mixed plastic waste stream (A),
b) sieving the precursor mixed plastic waste stream (A) to obtain a sieved mixed plastic waste stream (B) having only articles with dimensions in the range from 30 to 400 mm;
c) sorting the sieved mixed plastic waste stream (B) by means of one or more optical sorters wherein the sieved mixed plastic waste stream (B) is at least sorted by color and optionally also by polyolefin type and/or article form, thereby generating one or more single-color sorted polyolefin recycling stream(s) (C) and a mixed-color sorted polyolefin recycling stream (CM),
d) reducing the size of the pieces of mixed color-sorted polyolefin recycling stream (CM) to form a recycling stream (D) of mixed color-sorted polyolefin flakes, for example by shredding in a wet-shredding or dry-shredding process
e) washing the stream (D) of mixed color-sorted polyolefin flakes with a first aqueous washing solution (W1) without the input of thermal energy (at temperatures of less than 60°) and removing at least part of the first aqueous washing solution (W1), preferably substantially all of the first aqueous washing solution (W1), to obtain a first washed stream (E) of mixed color-sorted polyolefin flakes,
f) washing the first washed stream (E) of mixed color-sorted polyolefin flakes with a second aqueous washing solution (W2) with the input of thermal energy (at temperatures of more than 65°), and removing the second aqueous washing solution (W2) and any material not floating on the surface of the second aqueous washing solution to obtain a second washed stream (H) of mixed color-sorted polyolefin flakes, and
g) drying the second washed stream (H) of mixed color-sorted polyolefin flakes, thereby obtaining a stream of recycled mixed-color plastics flakes RF.

The removal of certain problematic single-color polyolefin recycling streams from the mixed-color sorted polyolefin recycling stream (CM) helps to generate a high-quality product having a grey/black color. In this regard, the removal of certain colors can improve the purity of the final grey/black recycled products in terms of polyolefin content and in terms of color.

The mixed-color sorted polyolefin recycling stream (CM) is subsequently used as incoming stream of recycled mixed-color plastics flakes RF for the present method of color adaptation.

The stream of recycled mixed-color plastics flakes RF obtained by the mechanical sorting and washing steps as described above contains essentially just one type of polyolefin, preferably selected from polyethylene PE and polypropylene PP.

At this stage after sorting and washing, the stream of recycled mixed-color plastics flakes RF has a polyethylene or polypropylene content, depending on the sorting target, of more than 90 wt.%, preferably more than 95 wt.%, even more preferably more than 98 wt.%. However, there will always be a certain percentage of non-target polyolefins left. Thus, the stream of the recycled mixed-color plastics flakes RF may have for example a content of polypropylene of more than 90 wt.%, and less than 10 wt.% of polyethylene or may have a content of polyethylene of more than 90 wt.%, and less than 10 wt.% of polypropylene.

Thus, the incoming stream of recycled mixed color plastics flakes RF may comprise a polypropylene-polyethylene containing blend of recycled material and is of a grey/black color.

In order to improve the color adaptation of the recycled mixed-color plastics flakes RF, the color values of the incoming stream of recycled mixed color plastics flakes RF have to be measured in a first step. In an embodiment the color values of the recycled mixed-color plastics flakes RF, are measured inline, for example by an inline RGB camera system. When using a RBG camera to determine the color composition of the mixed color flakes, the measured values have to be converted from RGB system to the CIELAB system. Subsequently, the color distribution or color deviation is determined from the measured color values.

The color composition or color space is determined using the CIELAB system.

In the CIELAB color space (L*a*b*) uniform color space, measured according to DIN EN ISO 11664-4, the color coordinates are: L*-the lightness coordinate; a*-the red/green coordinate, with +a* indicating red, and -a* indicating green; and b*-the yellow/blue coordinate, with +b* indicating yellow, and -b* indicating blue. The L*, a*, and b* coordinate axis define the three dimensional CIE color space. L* is defined from 0 to 100. The a*- and b*-axis are not limited explicitly.

L*a*b* is popular in the scientific community. In practice, it is mostly used in relation to the D65 illuminant. It was designed to replicate human perceived color distances and is therefore suitable for visualization and quantification of colors and their distances (Klein 2010; DIN EN ISO/CIE 11664-4:2020 2020).

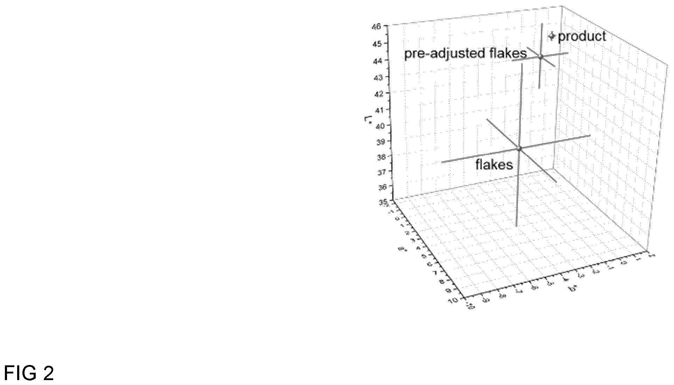

Typically, L*a*b* values can be calculated from the color space coordinates X (red), Y (green), Z( (blue); see also Diagram of Figure 2, by using mathematical functions according to DIN EN ISO/CIE 11664-4:2020 2020): $L ∗ = 116 {\left(Y/Yn\right)}^{1 / 3} - 16$ $a ∗ = 500 \left[{\left(X/Xn\right)}^{1 / 3}-{\left(Y/Yn\right)}^{1 / 3}\right]$ $b ∗ = 200 \left[{\left(Y/Yn\right)}^{1 / 3}-{\left(Z/Zn\right)}^{1 / 3}\right]$

Furthermore, the color deviation ΔE of two different specimens can be calculated from the particular deviation values ΔL, Δa and Δb: $Δ E * = \sqrt{{\left(ΔL*\right)}^{2} + {\left(Δa*\right)}^{2} + {\left(Δb*\right)}^{2}}$ in which
ΔL represents difference in lightness between the sample and a predefined color,
Δa represents the difference in redness or greenness between the sample and the predefined color, and
Δb represents blueness-yellowness differences between the sample and the predefined color.

It is to be understood that the lower the color deviation ΔE, the narrower the color distribution is in a given sample.

In an embodiment, the incoming stream of recycled mixed color plastics flakes RF has a CIELAB color space (L*a*b*) of
- L* from 0 to 85, preferably from 30 to 65;
- a* from -15 to 15, more preferably -10 to 10;
- b* from -15 to below 15, more preferably -10 to below 10.

In a further preferred embodiment, the incoming stream of recycled mixed color plastics flakes RF has a CIELAB color space (L*a*b*) of
- L* from 42 to 56;
- a* from -7 to 1.5; and
- b* from -5 to 5.

If the recycled mixed color plastics flakes RF having said CIELAB color space are now subsequently used for extrusion, without any color adaptation the color deviation ΔE of an extrudate RE obtained from the recycled mixed color plastics flakes RF will be too high to meet the color tolerances as defined by the market.

As mentioned above, one known approach to reduce the color deviation ΔE of the extrudate RE is color adaptation during extrusion. However, this approach has its limits, as it merely allows a narrowing of the color deviation ΔE of the extrudate RE to values above 10, but not lower.

To narrow the color deviation ΔE of the extrudate to values below 10, a further step has to be applied comprising the color pre-adjustment of the incoming stream of recycled mixed color plastics flakes RF according to the present method.

Thus, in a next step according to the present method a color prediction tool or model is established that allows a prediction of the color deviation of the extrudate obtained from an incoming stream of recycled mixed color plastics flakes RF and subsequent pre-adjustment of the color composition of the incoming stream of recycled mixed color plastics flakes RF before entering the extruder.

Once the color composition values L*, a* and b* of the incoming stream of recycled mixed-color plastics flakes RF are determined, the expected color of the recycled plastics extrudate RE is calculated by applying a color prediction model, that will be described in more detail now.

### Color prediction tool CPT

As mentioned above, once the color values of the recycled mixed-color plastics flakes RF are measured (for example by spectrophotometry in the visible range or using an inline RGB camera) and the color composition values L*, a* and b* of the incoming stream of recycled mixed-color plastics flakes RF are determined using the CIELAB system, the color values and color composition or color distribution of the recycled plastics extrudate RE are predicted by applying a color prediction tool CPT or color prediction model.

The color prediction model or tool (CPT) is a computer-implemented method comprising a suitable algorithm, wherein the color prediction tool CPT is established comprising the following steps:
- providing a training set of color values of recycled plastics flakes RF,
- providing a training set of color values of the recycled plastics extrudate RE obtained from said recycled plastics flakes RF,
- establishing a correlation between said training set of color values of recycled plastics flakes RF and training set of color values of the recycled plastics extrudate RE obtained from said recycled plastics flakes RF for creating the color prediction tool CPT.

The training set of color values of recycled mixed-color plastics flakes RF comprises color distribution values L*, a* and b* of the incoming stream of recycled mixed-color plastics flakes RF. The training set may also include the amount of color fractions, like the amount of green flakes, red flakes, blue flakes, white flakes. It is also possible to split each of the color fractions into its shades (e.g. dark blue, etc.)

The training set of color values of the recycled plastics extrudate RE comprises color distribution values L*, a* and b* of the extrudates obtained from said recycled plastics flakes RF.

By correlating the color values of recycled mixed-color plastics flakes RF and the color values of the recycled plastics extrudate RE obtained from said recycled mixed-color plastics flakes RF it is now possible to create the color prediction tool CPT.

The step of establishing a suitable correlation between the color values or color distribution of the incoming stream of recycled mixed-color plastics flakes RF and the extrudate RE may be done by applying a suitable algorithm.

In an embodiment, said correlation is achieved by means of a computer-implemented method using a suitable algorithm comprising the set of color values of recycled mixed-color plastics flakes RF and the set of color values of the recycled plastics extrudate RE. The algorithm determines a correlation by utilizing the training sets, such as color values of recycled mixed-color plastics flakes RF and color values of the recycled plastics extrudate RE stored in a database. If necessary, the data may be processed to reduce noise or other disturbing factors.

The algorithm applied may be an algorithm based on a regression model. The regression model may be a linear regression model or a non-linear regression model. For example, the regression models can be one of Partial Least Squares Regression (PLS), Principal Components Regression (PCR), Multilinear Regression Analysis (MLR) or Special cubic regression.

In the present case, regression models (or regression equations) for the L, a and b values were developed (using a suitable software like Design Expert) which provide information about the optimum color composition of the flakes and helps to understand the contribution of single color fractions of colored flakes to the final pellet color. The regression models predict that by addition or removal of certain color fractions in certain amounts that is calculated by the model, a desired target color value for L, a, b with a specific color deviation ΔE can be obtained.

Depending on the type of color value, i.e. L, a or b, different regression models are applied: for the color value L a linear regression may be applied, whereas for color values a, b special cubic regression may be applied.

In the present case, the regression equations for the color values L, a, b are described.

Each of the regression equations comprise regression coefficients that are calculated by a software algorithm based on the results from a series of trials using different mixtures of colored flakes reflecting different compositions of the mixed-color plastics flakes RF.

For color value L (lightness), the general equation applies: $L = L 1 \times \frac{wt% \left(White\right)}{100} + L 2 \times \frac{wt% \left(Blue\right)}{100} + L 3 \times \frac{wt% \left(Green\right)}{100} + L 4 \times \frac{wt% \left(Red\right)}{100}$ wherein L1, L2, L3, L4 are regression coefficients defining the contribution or weighting of each of the color components for obtaining a specific L value. It is to be understood that in case of color value L the amount and thus the regression coefficient L1 of the white color component will be larger than for the other color components.

In an embodiment the regression coefficient L1 may be in a range between 60 and 90, preferably between 65 and 85, more preferably between 70 and 80. The regression coefficients L2 and L3 may be in a range between 25 and 60, preferably between 30 and 55, more preferably between 35 and 50. The regression coefficient L4 may be in a range between 10 and 40, preferably between 15 and 35, more preferably between 20 and 30.

For color value a (red-green), the general equation applies: $\begin{matrix}a = - A 1 \times \frac{wt% \left(White\right)}{100} + A 2 \times \frac{wt% \left(Blue\right)}{100} - A 3 \times \frac{wt% \left(Green\right)}{100} + A 4 \times \frac{wt% \left(Red\right)}{100} \\ - A 5 \times \frac{wt% \left(White\right) \times wt% \left(Blue\right)}{100} - A 6 \times \frac{wt% \left(White\right) \times wt% \left(Green\right)}{100} \\ + A 7 \times \frac{wt% \left(White\right) \times wt% \left(Red\right)}{100} - A 8 \times \frac{wt% \left(Blue\right) \times wt% \left(Green\right)}{100} \\ - A 9 \times \frac{wt% \left(Blue\right) \times wt% \left(Red\right)}{100}\end{matrix}$ wherein A1-A9 are regression coefficients defining the contribution or weighting of each of the color components for obtaining a specific a value.

In an embodiment, the regression coefficients A1 and A3 may be in a range between 2 and 12, preferably between 2.5 and 10, more preferably between 3 and 8. The regression coefficients A2 and A4 may be in a range between 8 and 30, preferably between 10 and 25, more preferably between 12 and 22. The regression coefficients A5, A6 A8 may be in a range between 60 and 95, preferably between 65 and 92, more preferably between 70 and 90. The regression coefficients A7 and A9 may be in a range between 40 and 70, preferably between 45 and 55, more preferably between 50 and 60.

For color value b (yellow-blue), the general equation applies: $\begin{matrix}{\left(b+B1\right)}^{x} = B 2 \times \frac{wt% \left(White\right)}{100} + B 3 \times \frac{wt% \left(Blue\right)}{100} + B 4 \times \frac{wt% \left(Green\right)}{100} + B 5 \times \frac{wt% \left(Red\right)}{100} \\ - B 6 \times \frac{wt% \left(White\right) \times wt% \left(Blue\right)}{100} + B 7 \times \frac{wt% \left(White\right) \times wt% \left(Green\right)}{100}\end{matrix}$
wherein B1-B7 are regression coefficients defining the contribution or weighting of each of the color components for obtaining a specific b value, and
wherein x is a value between 1 and 2, preferably between 1.2 and 1.8, more preferably between 1.4 and 1.6, such as 1.42.

In an embodiment, the regression coefficient B1 may be in a range between 12 and 22, preferably between 15 and 21, more preferably between 18 and 20. The regression coefficients B2 and B4 may be in a range between 60 and 90, preferably between 65 and 85, more preferably between 70 and 80. The regression coefficients B3 and B5 may be in a range between 40 and 60, preferably between 43 and 58, more preferably between 45 and 55. The regression coefficients B6 and B7 may be in a range between 150 and 350, preferably between 170 and 320, more preferably between 200 and 300.

By applying the above regression equations using L, a and b values it is possible to calculate the optimum composition of the incoming mixed-color plastics flakes RF and to reduce the color deviation E.

It is also envisaged, that the algorithm used for establishing the color prediction model is continuously updated, in particular by using additional color values of recyclate flakes and extrudate as additional data to generate a further iteration of the algorithm, wherein the additional data are collected more recently than the data previously collected.

### Color pre-adjustment of recycled mixed-color plastics flakes RF

The color prediction model is subsequently applied to an incoming stream of recycled mixed-color plastics flakes RF to predict and compare to the desired final color distribution of the recycled plastics extrudate RE. Based thereon, the color distribution of the incoming stream of recycled mixed-color plastics flakes RF is pre-adjusted to meet the desired color values of the recycled plastics extrudate RE.

The step of color pre-adjustment can be done in different ways by changing the color distribution or weighting of certain color fractions. As mentioned previously, the color pre-adjustment can be done in at least one sorting by removing color flakes and/or during homogenization of the flakes by adding color flakes.

Thus, in one aspect of the invention the pre-adjusting of the color values of the recycled mixed-color plastics flakes RF is done in the sorting unit (when the stream of recycled mixed-color plastics flakes RF passes through at least one sorting unit) by removing at least one color fraction from at least a part of the incoming stream of the recycled mixed-color plastics flakes RF, like at least one fraction of green, blue and/or red color plastic flakes, to meet the desired color values of the recycled plastics extrudate RE.

It is to be understood that the number of color fractions is not limited to green, blue or red, but can cover any further fraction, in particular any number of sub-fractions each requiring a separate optical sorting unit.

It is further to be understood that each of the fractions of color plastic flakes is still a mixture of different colors, but enriched with green, blue and/or red color plastic flakes.

In a preferred embodiment, the at least one color fraction of plastics flakes is removed in the flake sorting unit from not more than 30 wt.%, preferably not more than 20 wt.%, more preferably not more than 10 wt.% of the incoming stream of recycled mixed-color plastics flakes RF. Thus, while the whole stream of recycled mixed-color plastics flakes RF passes through the at least one sorting unit, only a relatively small part of it is removed based on color prediction by the CPT.

The removed fractions of color plastic flakes are conveyed to and stored in respective storage silos, i.e. a storage silo for a fraction of green color plastic flakes, a storage silo for a fraction of red color plastic flakes, and a storage silo for a fraction of blue color plastic flakes.

It is however also possible that no color pre-adjustment of the incoming stream of recycled mixed-color plastics flakes RF in the flake sorting unit is necessary based on the results of the color scan and the color prediction tool CPT. In this case the incoming stream of recycled mixed-color plastics flakes RF is transferred from the flake sorting unit to the homogenizer without removal of color flakes.

In such an embodiment, at least 70 wt.%, preferably at least 80 wt.% more preferably at least 90 wt.% of the incoming stream of mixed-color recycled plastics flakes RF are directed to the homogenizing step after the removal of color flakes in the flake sorting unit.

Thus, a larger part (up to 90 wt%) of the incoming stream of recycled plastics flakes RF is directly introduced (after passing the flake sorting unit) into the homogenization reactor.

In such a case, the step of pre-adjusting of the color values of the recycled mixed-color plastics flakes RF may be done by adding at least one fraction of color plastic flakes, like fractions of green, blue and/or red color plastic flakes, to the recycled mixed-color plastics flakes RF during the homogenization step to meet the desired color values of the recycled plastics extrudate RE.

Preferably, the at least one fraction of color plastic flakes added to the recycled mixed-color plastics flakes RF during the homogenization step originates from the storage silos containing the fractions of color plastic flakes previously removed from the recycled mixed-color plastics flakes RF in the flake sorting unit. It is to be understood that based on the result provided by the color prediction tool the at least one color fraction added during homogenization may not be the same previously removed. For example, if the CPT calculate that the value a* of the final extrudate will be too high, red flakes may be removed in the flake sorting unit and/or green flakes are added during homogenization.

It also possible that the at least one fraction of color plastic flakes added during homogenization may be from an additional external source, i.e. not previously removed from the incoming stream of recycled mixed-color plastics flakes RF.

It can also be possible that no color fraction is added during the homogenization since the removal of one or more color fractions in the flake sorting unit is already sufficient to meet the desired color values and color deviation of the final extrudate.

According to an embodiment, the homogenization of the recycled plastics flakes RF, in particular the homogenization of the pre-adjusted recycled mixed-color plastics flakes RF is carried out in a homogenization silo upstream of the extruder. Homogenization of the plastics flakes can be done using all different technologies available on the market, such as mechanical stirring or by air blowing.

### Extrusion / Recycled plastics extrudate RE

Subsequently to the steps of color pre-adjustment during flake sorting and/or homogenization, the color pre-adjusted recycled mixed-color plastics flakes RF undergo a processing step in an extruder. In an embodiment, the color pre-adjusted flakes are transferred to a twin-screw extruder (TSE) via a suitable feeder, such as a loss-in-weight (LlW) feeder. It is also possible to use a single screw extruder (SSE), or a cascade of a SSE and a TSE, or a cascade of a TSE and a TSE. It is to be understood that the extruder can be located at the same location as flake sorting unit and homogenizer or at a different location.

The final color values of the recycled plastics extrudate RE are measured in the extruder inline, preferably on the melt or the pellets, or on an extruded strip or strand.

If the color values of the recycled plastics extrudate do not satisfy the desired values, a final color adjustment to meet the desired color values of the recycled plastics extrudate RE is carried out during extrusion. Thus, if the color values measured for the recycled plastics extrudate RE deviates from the desired color values recycled plastics extrudate RE, at least one color masterbatch is added in an amount that is based on the inline color measurement.

The final color adjustment of L, a and b values of the extrudate may be done by adding a suitable color masterbatch or a combination of up to four color masterbatches to the extruder using a control loop. When using a control loop, at least one suitable color masterbatch is added to the extruder in an amount that is actually required to stay within the final product specification. This reduces the overall amount of color master batch needed to meet the final extrudate color specification, as not all possible color fluctuations have to be compensated in the extruder, but due to the color pre-adjustment only specific color values or color fluctuations have to be compensated.

The dosing of color to the extruder is regulated by a suitable software algorithm (for example PID controller). E.g., increasing L* values would be compensated by reducing L*, e.g. by feeding of a black masterbatch. Increasing a* values would be compensated by reducing a*, e.g. by feeding of a green masterbatch. Increasing b* values would be compensated by reducing b*, e.g. by feeding of a blue masterbatch.

By combining the step of a color pre-adjustment of an incoming stream of mixed-color plastic flakes RF and preferably the step of a final color adjustment in the extruder it is possible to adjust the color values L, a and b such that the color deviation ΔE in the recyclate extrudate RE is less than 10, preferably less than 8, preferably less than 5, more preferably less than 3, even more preferably less than 2, still more preferably 1 or less than 1, such as 0.5.

### Process line

The presently described method can be carried out in a process line, wherein the process line comprises:
- at least one unit for flake sorting at least part of the incoming stream of recycled mixed-color plastics flakes RF,
- at least one system arranged upstream (i.e. before) of the at least one flake sorting unit for measuring the color values of the recycled mixed-color plastics flakes RF,
- a plurality of storage silos for storing fractions of color plastic flakes, in particular for storing fractions of monochromatic color plastic flakes,
- at least one homogenization reactor downstream of the at least one flake sorting reactor and in communication with the plurality of storage silos,
- at least one extruder downstream of the at least one homogenization reactor, and
- at least one system for inline measurement of the color values of the recycled plastics extrudate RE and a color adjustment control loop associated with the extruder.

The at least one system, for measuring the color values of the recycled mixed-color plastics flakes RF may be any suitable camera system or spectroscopic systems, like NIR or IR systems. A RBG camera system is preferably used. The RGB camera can be a stand alone system. However, it is also possible to use the RGB camera which is installed/used in an optical sorting unit in case a unit is available further upstream in the mechanical sorting process of the plastic waste material.

The at least one system for inline measurement of the color values of the recycled plastics extrudate RE may be any suitable inline spectroscopic system, such as a UV/VIS system.

The invention is now explained in more detail by means of examples with reference to the Figures. It shows:
- Figure 1: a general scheme of the method according to an embodiment of the invention; and
- Figure 2: a diagram illustrating the 2-step color adjustment according to the invention.

### Experimental section

### CIELAB color space (L*a*b*)

In the CIE L*a*b* uniform color space, measured according to DIN EN ISO 11664-4, the color coordinates are: L*-the lightness coordinate; a*-the red/green coordinate, with +a* indicating red, and -a* indicating green; and b*-the yellow/blue coordinate, with +b* indicating yellow, and -b* indicating blue. The L*, a*, and b* coordinate axis define the three-dimensional CIE color space. Standard Konica/Minolta Colorimeter CM-3700A.

### Color measurement of recycled plastics flakes RF

Color values of recycled plastics flakes are measured using NIR inline camera systems with a RBG camera system, for example provided by PerkinElmer. The DA 7350 of PerkinElmer is a versatile in-line NIR instrument for measurement of bulk products such as powders, grains, meals, granules, pellets, slurries and pastes in pipes, chutes, chain conveyors and similar. It performs real-time multi-constituent measurements of a product in a processing line providing information for process control and quality monitoring. It is to be understood that also any other camera systems are applicable.

### Color measurement of recycled plastics extrudate RE

Color values of recycled plastics extrudate RE are measured inline on extruded strands or polymer films.

An inline spectroscopic system by Colvistec, Germany may be used for this purpose. The InSpectro X was designed as an inline color measurement system for continuous production processes. It comprises an integrated spectrometer, which can simultaneously evaluate measurement signals from up to two probes in the wavelength range of 220 - 820 nm, in 1 nm steps. For many applications, the complex spectral information can be divided into three simple color values, e.g. L*, a*, and b*. These are automatically converted from the CIELab color space and displayed. These reduced color values serve as real-time indicators for an ongoing process.

### Example

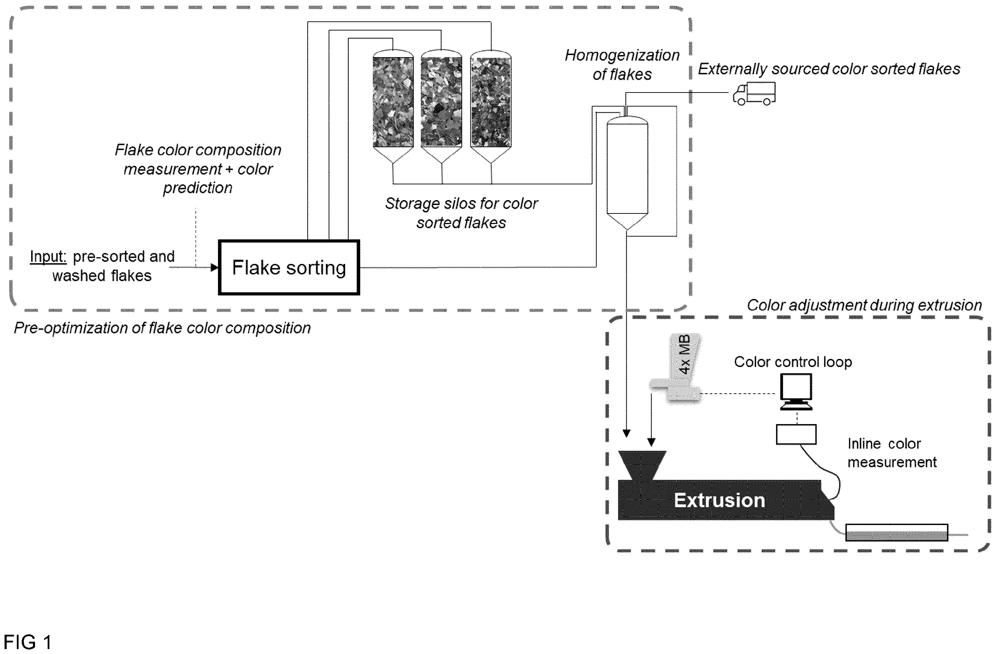

Figure 1 shows a general scheme of the method according to the invention. As described, the present method comprises a two-step approach: a) pre-adjustment of the color composition of the incoming stream of recycled mixed-color plastics flakes RF, and b) color adjustment during extrusion.

According to the embodiment illustrated in Figure 1, the incoming stream of recycled plastics flakes RF is washed. Subsequently to the step of flake washing, the color composition of at least a part of the incoming stream of recycled mixed-color plastics flakes RF is measured by an inline RGB camera system in the conveying pipes or belts.

Based on the measured color values of the recycled mixed-color plastics flakes RF, the color prediction model is applied to calculate the expected color of the pellets, considering variations in pigment concentrations and contaminants via training of the color prediction model with real world flake samples.

The color prediction model is an algorithm that establishes a correlation between the measured color values of the recycled mixed-color plastics flakes RF and the color values of the recycled plastics extrudates RE obtained from said recycled plastics flakes RF. This allows to provide a pre-adjusted flake stream with predictable, narrowed down color range to the extruder.

For prove of concept different regression equations for the L, a and b values where developed which provide information about the optimum color composition of the flakes and help to understand the contribution of single color fractions of colored flakes to the final pellet color. $L = 76.68 \times \frac{wt% \left(White\right)}{100} + 39.28 \times \frac{wt% \left(Blue\right)}{100} + 47.42 \times \frac{wt% \left(Green\right)}{100} + 25.12 \times \frac{wt% \left(Red\right)}{100}$ $\begin{matrix}a = - 3.57 \times \frac{wt% \left(White\right)}{100} + 14.15 \times \frac{wt% \left(Blue\right)}{100} - 7.15 \times \frac{wt% \left(Green\right)}{100} + 20.33 \times \frac{wt% \left(Red\right)}{100} \\ - 88.6 \times \frac{wt% \left(White\right) \times wt% \left(Blue\right)}{100} - 81.09 \times \frac{wt% \left(White\right) \times wt% \left(Green\right)}{100} \\ + 58.77 \times \frac{wt% \left(White\right) \times wt% \left(Red\right)}{100} - 71.32 \times \frac{wt% \left(Blue\right) \times wt% \left(Green\right)}{100} \\ - 58.59 \times \frac{wt% \left(Blue\right) \times wt% \left(Red\right)}{100}\end{matrix}$ $\begin{matrix}{\left(b+18.07\right)}^{1.42} = 75.44 \times \frac{wt% \left(White\right)}{100} + 48.62 \times \frac{wt% \left(Blue\right)}{100} + 79.76 \times \frac{wt% \left(Green\right)}{100} \\ + 50.86 \times \frac{wt% \left(Red\right)}{100} - 284.7 \times \frac{wt% \left(White\right) \times wt% \left(Blue\right)}{100} \\ + 212.97 \times \frac{wt% \left(White\right) \times wt% \left(Green\right)}{100}\end{matrix}$

A confirmation trial was carried out to proof the accuracy of the model recipe, which was targeting L = 53, a= 0 and b=0 at the final pellet. Therefore, the regression equations were used to calculate the optimum flake composition. L, a & b values were measured after extrusion on injection molded plaques.

Based on the regression equations it is calculated that the flake composition of recycled mixed-color plastics flakes RF should be adapted to 45wt% white flakes, 29.41wt% red flakes, 13.02 wt.% green flakes, 12.57wt% blue flakes to obtain the desired color values for recycled plastics extrudates RE.

The color deviation ΔE of the extrudate RE obtained is lower than 1.7.

By applying the color prediction model to the incoming stream of recycled mixed-color plastics flakes RF the final color of the recycled plastics extrudate RE is predicted and compared to the desired final color of the recycled plastics extrudate RE. Based on that, defined color fractions are removed from the incoming stream of recycled mixed-color plastics flakes RF by state of the art flake sorting, and/or other color fractions are to be added and mixed in a homogenization silo upstream of the extruder, to provide a flake composition which matches the ingoing color specification to the extruder.

The removed fractions of color flakes are conveyed to intermediate storage silos. It has been found that e.g. high amounts of blue flakes have a strong effect on final color which can practically not be compensated by adding the complementary color. The colors and their amounts which need to be removed from the stream of recycled mixed-color plastics flakes RF to meet desired L, a& b values of the final extrudate obtained therefrom, are calculated by the above described color prediction tool (CPT).

The model tool allows to predict the final color of the extrudate based on the incoming flakes color composition. An important input parameter for the prediction model is the color composition of the recycled mixed-color plastics flakes RF which is measured by an inline RGB camera system in the conveying pipes after flake washing.

After recyclate flake sorting, the recyclate flakes are further conveyed to a homogenization silo. At this stage, it is now possible to add certain color fractions to the recyclate flake stream if needed according to the calculations of the color prediction model. The recyclate flake mixture needs to be homogenized properly in the silo before extrusion. This leads to a flake mixture which has a predictable and relatively narrow L, a & b range.

In a second step, the final color adjustment and narrowing down of the L, a& b ranges to the final desired specification is performed during extrusion. The pre-adjusted flakes are transferred to a twin-screw extruder. The flakes are fed to the extruder via a loss-in weight (LlW) feeder. The extruder melts and homogenizes the flakes and mixes their color. This color (L,a&b-values) needs to be measured inline, either in the melt or at the pellets, or potentially on an extruded strip or strand. In case the mixed color doesn't meet the specification, a control loop feeds back the current color values to the controller for comparison with the set (target) values. Additional LIW-feeders are adding color masterbatch to the extruder to correct the color during the extrusion step. One up to four such LIW feeders feeding one up to four different color masterbatches can be used.

The concept of reducing the color values ΔL, Δa & Δb through 2-step color adjustment by using pre-adjusted flakes and a color adjustment during extrusion is illustrated in the diagram of Figure 2. The diagram depicts how the color distribution changes and narrows from the incoming recycled mixed-color plastics flakes RF to the color pre-adjusted recyclate flakes and to the final extrudate product RE.

## Claims

1. Method for providing a recycled plastics extrudate RE with desired color values and color deviation from recycled mixed-color plastics flakes RF
comprising the following steps:
- providing a stream of recycled mixed-color plastics flakes RF,
- measuring the color values of at least a part of the stream of the recycled mixed-color plastics flakes RF and determining the color distribution from the measured color values,
- predicting the color values of the recycled plastics extrudate RE based on the measured color values of the recycled mixed-color plastics flakes RF by applying a color prediction tool CPT,
- pre-adjusting the color values of the recycled mixed-color plastics flakes RF by changing the color composition of the recycled mixed-color plastics flakes RF to meet the desired color values of the recycled plastics extrudate RE by removing at least one color fraction of plastics flakes from at least a part of the stream of the recycled mixed-color plastics flakes RF in at least one sorting unit and/or by adding at least one color fraction of plastics flakes to the recycled mixed-color plastics flakes RF during homogenization;
- homogenizing the color pre-adjusted recycled mixed-color plastics flakes RF; and
- extruding the color pre-adjusted recycled plastics flakes RF to obtain the recycled plastics extrudate RE with the desired color values while measuring the final color of the recycled plastics extrudate RE.

2. Method according to claim 1, wherein the color values of at least a part of the stream of recycled mixed-color plastics flakes RF, are measured inline, for example by an inline RGB camera system.

3. Method according to one of the preceding claims, wherein the recycled mixed-color plastics flakes RF are recovered from a waste plastic material derived from post-consumer and/or post-industrial waste, preferably by mechanically sorting.

4. Method according to one of the preceding claims, wherein the color prediction tool CPT is a computer-implemented method comprising a suitable algorithm, wherein the color prediction tool CPT is established comprising the following steps:
- providing a training set of color values of recycled plastics flakes RF,
- providing a training set of color values of the recycled plastics extrudate RE obtained from said recycled plastics flakes RF,
- establishing a correlation between said training set of color values of recycled plastics flakes RF and training set of color values of the recycled plastics extrudate RE obtained from said recycled plastics flakes RF for creating the color prediction tool CPT.

5. Method according to one of the preceding claims, wherein the pre-adjusting of the color values of the recycled mixed-color plastics flakes RF is done by removing at least one color fraction from at least a part of the stream of the recycled mixed-color plastics flakes RF, like at least one fraction of green, blue and/or red color plastic flakes, in the flake sorting unit to meet the desired color values of the recycled plastics extrudate RE.

6. Method according to claim 5 wherein the at least one color fraction of plastics flakes is removed in the flake sorting unit from not more than 30 wt %, preferably not more than 20 wt%, more preferably not more than 10 wt% of the incoming stream of recycled mixed-color plastics flakes RF.

7. Method according to one of claims 5-6, wherein the removed fractions of color plastic flakes are conveyed to and stored in respective storage silos.

8. Method according to one of the preceding claims, wherein at least 70 wt%, preferably at least 80 wt% more preferably at least 90 wt% of the incoming stream of mixed-color recycled plastics flakes RF are directed to the homogenizing step after the removal of color flakes in the flake sorting unit.

9. Method according to one of the preceding claims, wherein pre-adjusting of the color values of the recycled mixed-color plastics flakes RF is done by adding at least one fraction of color plastic flakes, like fractions of green, blue and/or red color plastic flakes, to the recycled mixed-color plastics flakes RF during the homogenization step to meet the desired color values of the recycled plastics extrudate RE.

10. Method according to claim 9, wherein the at least one fraction of color plastic flakes added to the recycled plastics flakes RF during the homogenization step originate from the storage silos containing the fractions of color plastic flakes previously removed from the recycled plastics flakes RF during flake sorting or from an external source.

11. Method according to one of the preceding claims, wherein the homogenization of the recycled mixed-color plastics flakes RF, in particular the color pre-adjusted recycled plastics flakes RF, is carried out in a homogenization silo upstream of the extruder.

12. Method according to one of the preceding claims, wherein the final color values of the recycled plastics extrudate RE are measured in the extruder inline, preferably on the melt or the pellets, or on the extruded strip or strand.

13. Method according to one of the preceding claims, wherein a final color adjustment to meet the desired color values of the recycled plastics extrudate RE is carried out during extrusion, in particular using an inline color control feedback loop.

14. Method according to claim 13, wherein at least one color masterbatch is added to the extruder for a final adjustment of the color values of the recycled plastics extrudate RE using a color control loop, wherein the color masterbatch is added if the color measured for the recycled plastics extrudate RE deviates from the desired color values of the recycled plastics extrudate RE.

15. A process line for carrying out the method according to one of the preceding claims comprising:
- at least one unit for flake sorting at least part of the incoming stream of recycled mixed-color plastics flakes RF,
- at least one system arranged upstream of the at least one flake sorting unit for measuring the color values of the recycled mixed-color plastics flakes RF,
- a plurality of storage silos for storing fractions of color plastic flakes,
- at least one homogenization reactor downstream of the at least one flake sorting unit and in communication with the plurality of storage silos,
- at least one extruder downstream of the at least one homogenization reactor, and
- at least one system for inline measurement of the color values of the recycled plastics extrudate RE and a color adjustment control loop associated with the extruder.
